# EUROPÄISCHE PATENTSCHRIFT

(11) **EP 0 612 596 B1**
(45) Veröffentlichungstag und Bekanntmachung des Hinweises auf die Patenterteilung: **28.12.1994**
(21) Anmeldenummer: 93890189.9
(22) Anmeldetag: 28.09.1993
(51) Int. Cl.: B27M 3/04, B27M 3/06, B32B 21/13, B32B 21/10

(54) **Naturholzplatte, Naturholzverbundplatte und Verfahren zu deren Herstellung**
Natural wood panel, natural laminated wood panel and method for their preparation
Panneau en bois naturel, panneau composé en bois naturel et procédé pour leur fabrication

(30) Priorität: 25.02.1993 AT 359/93; 31.03.1993 AT 648/93
(43) Veröffentlichungstag der Anmeldung: 31.08.1994
(73) Patentinhaber: Neubauer, Josef, A-9064 Pischeldorf (Kärnten) (AT)
(72) Erfinder: Neubauer, Josef, A-9064 Pischeldorf (Kärnten) (AT)
(74) Vertreter: Beer, Manfred, Dipl.-Ing.

(56) Entgegenhaltungen:
- EP-A- 0 198 256
- EP-A- 0 236 283
- AT-B- 240 035
- AT-B- 240 593
- AT-B- 380 652
- CH-A- 557 222
- CH-A- 557 223
- CH-A- 563 852
- DD-B- 104 251
- DE-A- 1 703 352
- DE-A- 2 049 089
- DE-A- 2 102 652
- DE-A- 2 922 046
- DE-A- 3 326 843
- DE-A- 3 936 314
- DE-A- 4 126 712
- DE-C- 2 938 062
- US-A- 3 916 059

## Beschreibung

Die Erfindung betrifft eine Naturholzplatte. Naturholzplatten werden z.B. zur Herstellung von Parkettböden oder Naturholzverbundplatten verwendet, die in der Regel aus mindestens zwei, im allgemeinen drei oder vier Lagen von Naturholzplatten wie Brettern aber auch Kanthölzern hergestellt sind. Allen bekannten Naturholzplatten bzw. Brettern und Kanthölzern ist gemeinsam, daß der Faserverlauf des Holzes parallel zur Naturholzplattenebene bzw. Kantholzlängsachse verläuft.

Derartige Naturholzplatten bzw. Naturholzverbundplatten sind beispielsweise aus der US-PS 3 531 352, DE-OS 2 404 415, DE-OS 39 36 314, EP-A-387 902 und CH-PS 620 854 bekannt.

Nachteilig bei diesen Naturholzplatten bzw. Naturholzverbundplatten ist, daß sie insbesondere bei Verwendung von weichen Hölzern geringer Dichte nur eine sehr geringe Oberflächenfestigkeit aufweisen, d.h., daß z.B. Parkettböden nur eine sehr geringe Trittfestigkeit aufweisen und daß anderseits nur hochwertiges Holz des Erdstammes verwendet werden kann, in dem keine oder nur sehr wenige Äste vorhanden sind, da sich diese am fertigen Produkt mit dem längsgerichteten Faserverlauf sowohl optisch als auch festigkeitsmäßig auswirken.

Naturholzplatten mit senkrecht zur Oberfläche gerichteten Fasern sind aus DE-A- 2 922 046 bekannt. Verbundplatten mit schräg zur Oberfläche gerichteten Fasern sind aus EP-A- 198 256 bekannt. Dabei werden jedoch Lamellen verwendet, die im wesentlichen parallel zum Faserverlauf geschnitten wurden.

Die Erfindung stellt sich daher die Aufgabe eine Naturholzplatte zur Verfügung zu stellen, welche die genannten Nachteile nicht aufweist.

Erfindungsgemäß wird diese Aufgabe dadurch gelöst, daß die Schnittebene beim Zerteilen von natürlichem Holz so gelegt wird, daß die Fasern zur Plattenebene in einem Winkel α zwischen 20° und 70° geneigt sind.

Durch die erfindungsgemäße Naturholzplatte wird durch die Ausrichtung der Fasern im Winkel zur Oberfläche der Naturholzplatte sowohl die Oberflächenfestigkeit erhöht, als auch eine Möglichkeit geboten, Holz von Baumstämmen ab einem Durchmesser von etwa 12 cm zu verwenden, in dem sich viele Äste befinden, da es einerseits möglich ist, u.a. durch die Wahl des Schnittwinkels zur Längsachse des Baumstammes Äste problemlos auszusparen und anderseits allenfalls in der Naturholzplatte vorhandene Äste nicht störend empfunden werden, da die Maserung des Holzes durch den schrägen Schnittwinkel im Gegensatz zu einem Schnitt parallel zur Faserrichtung sichtbar ist und Äste in das Gesamtbild der Maserung integriert werden.

Wenn bisher und in der Folge von Naturholzplatten die Rede ist, so sind in erster Linie Platten mit einer Dicke von vorzugsweise 4 bis 20 mm gemeint. Die Erfindung ist jedoch nicht hierauf beschränkt, sondern erstreckt sich auch auf Naturholzprodukte, die beispielsweise eher eine Balken- oder Quaderform aufweisen, als eine Plattenform.

Der Winkel, in dem die Fasern zur Plattenebene bzw. im Fall von balkenförmigen Hölzern zu deren Längsachse ausgerichtet sind, ist ungleich 0 und 90°, und wird, in den meisten Fällen zwischen 20° und 70° betragen, da hier sowohl eine hohe Oberflächenfestigkeit, als auch eine angemessene Biege- und Zugfestigkeit der Naturholzplatte gegeben ist.

Die Erfindung betrifft weiters eine Naturholzverbundplatte, die erfindungsgemäß dadurch gekennzeichnet ist, daß sie wenigstens eine Lage aus miteinander verbundenen, erfindungsgemäßen Naturholzplatten aufweist. Die einzelnen Naturholzplatten können dabei gleiche oder verschiedene Formate aufweisen, wodurch die verschiedensten Flächenmuster hergestellt werden können. Die einzelnen Platten können dabei mit besonders dafür geeigneten Vorrichtungen mechanisch unter Wärme und Druckeinwirkung mittels eines Bindematerials miteinander verbunden und anschließend einer Oberflächenbearbeitung unterzogen werden.

Gemäß bevorzugter Ausführungsformen der Erfindung kann vorgesehen sein, daß die Fasern der Naturholzplatten in die gleiche Richtung weisen, oder daß die Fasern der Naturholzplatten in verschiedene Richtungen weisen. Insbesondere bei der Ausführungsform, bei der die Fasern der Naturholzplatten in verschiedene Richtungen weisen, ist es möglich, sowohl das optische Erscheinungsbild der Naturholzverbundplatte als auch die mechanische Festigkeit derselben auf beliebige Weise zu beeinflussen. Dabei sind Ausführungsformen denkbar, bei welchen der Winkel der Fasern zur Naturholzplattenebene bei allen Naturholzplatten der gleiche ist, durch geeignete Anordnung der Naturholzplatten zueinander jedoch die Fasern in unterschiedliche Richtungen ausgerichtet sind. Gleichermaßen ist es denkbar, daß auch der Winkel der Fasern in den einzelnen Naturholzplatten unterschiedlich ist.

Gemäß einer weiteren Ausführungsform der Erfindung kann vorgesehen sein, daß wenigstens eine weitere Lage vorgesehen ist, die mit der Lage aus Naturholzplatten verbunden ist.

Dabei kann entweder vorgesehen sein, daß die wenigstens eine weitere Lage eine erfindungsgemäße Naturholzverbundplatte ist, oder daß die wenigstens eine weitere Lage aus Holz, Holzfaserstoffen, schallabsorbierendem, wärmedämmendem, strahlenabweisendem oder wärmeleitendem Material hergestellt ist.

Wenn vorgesehen ist, daß die wenigstens eine weitere Lage eine erfindungsgemäße Naturholzverbundplatte ist, dann kann bevorzugt vorgesehen sein, daß die Fasern der einzelnen Lagen der Naturholzverbundplatte in unterschiedliche Richtungen weisen. Auf diese Weise können zwei- oder mehrschichtige Verbundplatten hergestellt werden, die sowohl eine sehr hohe Oberflächenfestigkeit, d.h. Druckfestigkeit aufweisen, als auch eine hohe Biege- und Zugfestigkeit, die insbesondere durch die unterschiedlich ausgerichteten Faserverläufe in den einzelnen Lagen gewährleistet ist. Dabei kann entweder vorgesehen sein, daß in jeder Lage die Ausrichtung der Fasern gleich, die Ausrichtung der Fasern der einzelnen Lagen zueinander jedoch unterschiedlich ist, oder daß sowohl die Ausrichtung der Fasern innerhalb der einzelnen Lagen, als auch der einzelnen Lagen zueinander unterschiedlich ist.

Weitere Merkmale und Vorteile der Erfindung ergeben sich aus den Unteransprüchen und der nachfolgenden Beschreibung von Ausführungsbeispielen der Erfindung unter Bezugnahme auf die Zeichnungen. Es zeigt
Fig. 1 an einem Massivholz zwei beispielhafte Ausführungsformen, in welchen Winkeln Naturholzplatten vom Massivholz abgetrennt werden können,
die Fig. 2 bis 6 Stirnansichten auf das Massivholz von Fig. 1 in Form eines Rund-, Voll-, Halb-, Kreuz-, oder Profilholzes,
die Fig. 7, 8 und 9 Naturholzplatten im Schnitt, bei welchen die Fasern im Winkel von 45°, 40° bzw. 30° zur Plattenebene ausgerichtet sind,
Fig. 10 einen Naturholzplattenverbund in Form einer einzigen Lage, bei dem die einzelnen Naturholzplatten über eine zahnartige Verbindung miteinander verbunden sind,
Fig. 11 eine aus zwei Lagen aufgebaute Naturholzverbundplatte, wobei eine Lage aus erfindungsgemäßen Naturholzplatten und die zweite Lage als Trägerplatte ausgeführt ist,
Fig. 12 einen Naturholzplattenverbund, bei dem zwischen einer oberen und unteren Lage aus erfindungsgemäßen Naturholzplatten eine Lage aus Isoliermaterial angeordnet ist,
die Fig. 13 bis 15 Ausführungsformen von Naturholzverbundplatten, bei welchen zwei oder mehrere Lagen aus erfindungsgemäßen Naturholzplatten mit gleicher oder unterschiedlicher Faserrichtung miteinander verbunden sind, und
die Fig. 16 bis 20 Naturholzverbundplatten, die aus Naturholzplatten verschiedener Form zusammengesetzt sind.

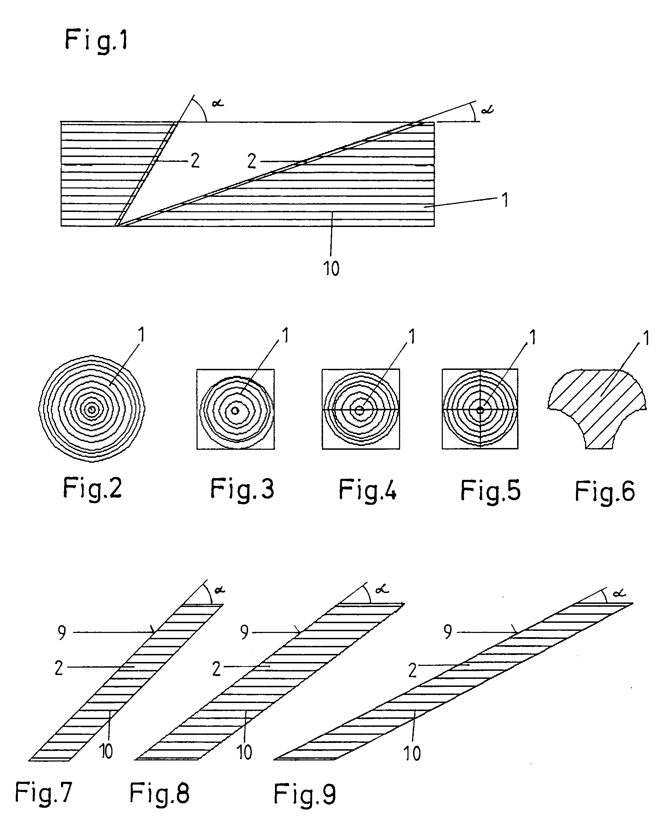

In Fig. 1 ist ein Massivholz 1, beispielsweise ein vorbearbeiteter Balken oder ein unbearbeiteter Baumstamm dargestellt, dessen Fasern durch mit 10 bezeichnete Linien angedeutet sind. Am Massivholz 1 sind zwei von diesem abzutrennende Naturholzplatten 2 dargestellt, die zur Richtung der Fasern 10 in einem Winkel α von 60° bzw. 20° geneigt sind.

In den Fig. 2 bis 6 sind verschiedene mögliche Querschnittsformen des Massivholzes von Fig. 1 dargestellt, von welchem die Naturholzplatten 2 in einem Winkel zwischen 0 und 90° zur Längsachse des Massivholzes, d.h. zu dessen Faserrichtung, abgetrennt werden können.

In den Fig. 7 bis 9 sind Naturholzplatten 2 im Schnitt dargestellt, wobei die Fasern wiederum mit 10 bezeichnet sind. Die Fasern 10 schließen mit den Plattenebenen, d.h. mit den Oberflächen 9 der Naturholzplatten 2 einen Winkel von 45° (Fig. 7), 40° (Fig. 8) bzw. 30° (Fig. 9) ein. Der Betrag des Winkels kann dabei wie bereits weiter oben erwähnt, durch die verschiedensten Randbedingungen, wie die gewünschte Maserung des Holzes, die erforderliche Festigkeit der Naturholzplatte 2 bzw. der daraus herzustellenden Naturholzverbundplatte oder von beim Abtrennen vom Massivholz zu umgehenden Ästen oder anderen Fehlerstellen abhängen.

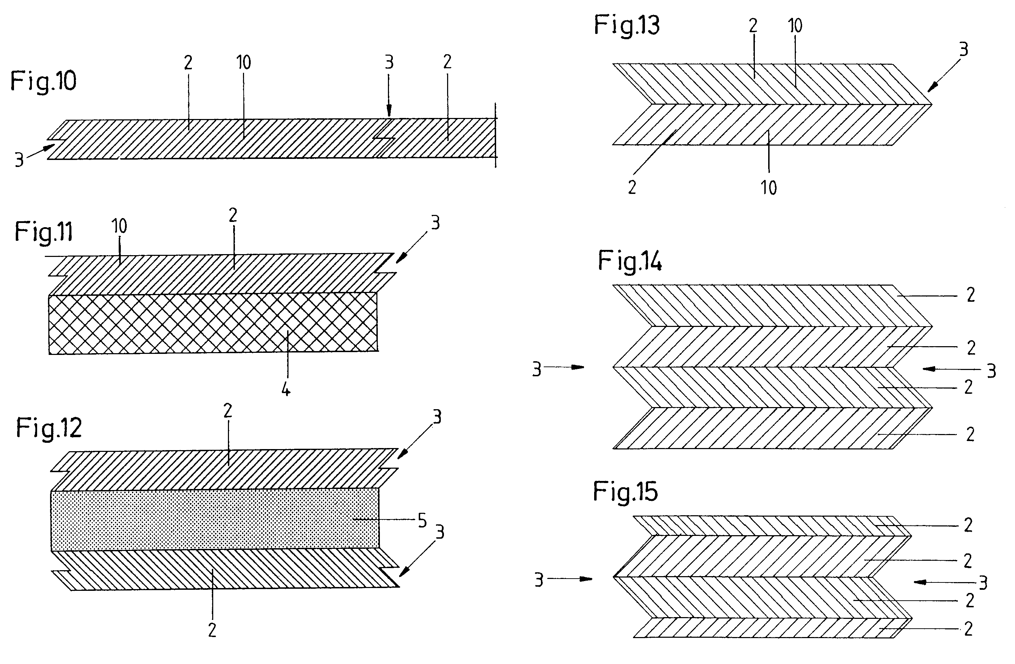

In Fig. 10 ist eine einlagige Naturholzverbundplatte dargestellt, die miteinander über eine zahnartige Verbindung 3 verbundene Naturholzplatten 2 aufweist. Über die zahnartigen Verbindungen 3 können die einzelnen Naturholzplatten 2 z.B. unter Einwirkung von Wärme und Druck miteinander fest verleimt werden. Anstatt der zahnartigen Verbindung 3 kann natürlich auch jede andere geeignete Verbindung verwendet werden.

In Fig. 11 ist eine Naturholzverbundplatte dargestellt, die eine Lage aus erfindungsgemäßen Naturholzplatten 2 und eine zweite Lage 4 aus einer Trägerplatte beliebigen Werkstoffs besteht. Der Werkstoff der Trägerplatte kann beispielsweise wie an sich bekannt, Holz, Holzfaserstoff, schallabsorbierendes, wärmedämmendes oder strahlenabweisendes Material sein.

In Fig. 12 ist eine Naturholzverbundplatte dargestellt, die aus einer oberen und unteren Lage aus Naturholzplatten 2 besteht, deren Ausrichtung der Fasern zueinander nicht parallel, sondern geneigt ist. Dadurch läßt sich sowohl die Biege- als auch die Zugfestigkeit der Naturholzverbundplatte wesentlich erhöhen. Zwischen den Lagen aus Naturholzplatten 2 ist eine Lage 5 aus isolierendem Werkstoff angeordnet.

In Fig. 13 ist eine Naturholzverbundplatte dargestellt, die zwei Lagen aus Naturholzplatten 2 gleicher Dicke aufweist, wobei die Faserrichtung 10 in den zwei Lagen unterschiedlich ist.

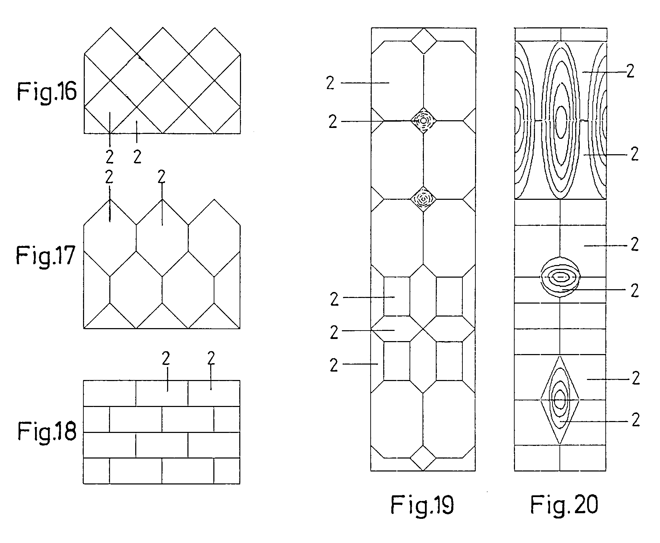

In Fig. 14 ist eine Naturholzverbundplatte aus vier gleich dicken Lagen dargestellt, die aus erfindungsgemäßen Naturholzplatten 2 bestehen und wobei die Faserrichtung 10 benachbarter Naturholzplatten 2 unterschiedlich ist.

In Fig. 15 ist eine Naturholzverbundplatte aus vier Lagen dargestellt, die ebenfalls aus erfindungsgemäßen Naturholzplatten 2 bestehen. Bei der Ausführungsform gemäß Fig. 15 sind jedoch die äußeren z.B. aus Edelhölzern bestehenden Lagen 2 dünner als die mittleren z.B. aus minderwertigerem Holz bestehenden Lagen.

In den Fig. 16 bis 20 sind Naturholzverbundplatten dargestellt, die aus erfindungsgemäßen Naturholzplatten 2 gleicher oder unterschiedlicher Form hergestellt sind.

Bei allen beschriebenen Ausführungsformen kann die Ausrichtung der Fasern 10 innerhalb einer Lage entweder gleich oder unterschiedlich sein, wodurch sich sowohl die Festigkeit, als auch das Aussehen der Naturholzverbundplatte beeinflussen läßt.

Zusammenfassend kann die Erfindung wie folgt dargestellt werden:

Bei der erfindungsgemäßen Naturholzplatte sind die Fasern 10 zur Plattenebene 2 in einem Winkel α zwischen O° und 90°, insbesondere zwischen 20° und 70°, geneigt.

Eine Naturholzverbundplatte weist wenigstens eine Lage aus miteinander verbundenen derartigen Naturholzplatten 2 auf, wobei die Fasern 10 der Naturholzplatten 2 in die gleiche Richtung oder in verschiedene Richtungen weisen können.

Es kann wenigstens eine weitere Lage vorgesehen sein, die mit der Lage aus Naturholzplatten 2 verbunden ist, wobei diese Lage ebenfalls eine Naturholzverbundplatte oder eine Lage aus Holz, Holzfaserstoffen, schallabsorbierendem, wärmedämmendem, strahlenabweisendem oder wärmeleitendem Material sein kann.

## Patentansprüche

1. Naturholzplatte, dadurch gekennzeichnet, daß die Schnittebene beim Zerteilen von natürlichem Holz so gelegt wird, daß die Fasern (10) zur Plattenebene (2) in einem Winkel (α) zwischen 20° und 70° geneigt sind.

2. Naturholzverbundplatte, dadurch gekennzeichnet, daß sie wenigstens eine Lage aus miteinander verbundenen Naturholzplatten (2) nach Anspruch 1 aufweist.

3. Naturholzverbundplatte nach Anspruch 2, dadurch gekennzeichnet, daß die Fasern (10) der Naturholzplatten (2) in die gleiche Richtung weisen.

4. Naturholzverbundplatte nach Anspruch 2, dadurch gekennzeichnet, daß die Fasern (10) der Naturholzplatten (2) in verschiedene Richtungen weisen.

5. Naturholzverbundplatte nach einem der Ansprüche 2 bis 4, dadurch gekennzeichnet, daß wenigstens eine weitere Lage vorgesehen ist, die mit der Lage aus Naturholzplatten (2) verbunden ist.

6. Naturholzverbundplatte nach Anspruch 5, dadurch gekennzeichnet, daß die wenigstens eine weitere Lage eine Naturholzverbundplatte nach einem der Ansprüche 3 bis 5 ist.

7. Naturholzverbundplatte nach Anspruch 6, dadurch gekennzeichnet, daß die Fasern (10) der einzelnen Lagen der Naturholzverbundplatte in unterschiedliche Richtungen weisen.

8. Naturholzverbundplatte nach Anspruch 5, dadurch gekennzeichnet, daß die wenigstens eine weitere Lage aus Holz, Holzfaserstoffen, schallabsorbierendem, wärmedämmendem, strahlenabweisendem oder wärmeleitendem Material hergestellt ist.

9. Naturholzverbundplatte nach einem der Ansprüche 5 bis 8, dadurch gekennzeichnet, daß die Dicke der Lagen unterschiedlich ist.

10. Naturholzverbundplatte nach einem der Ansprüche 5 bis 8, dadurch gekennzeichnet, daß die Dicke der Lagen gleich ist.

## Claims

1. A natural wood panel, characterized in that the cutting plane for cutting up natural wood is so set that the fibres (10) are inclined at an angle (α) between 20° and 70° to the plane of the panel (2).

2. A laminated natural wood panel, characterized in that it comprises at least one layer of natural wood panels (2) according to claim 1 bonded together.

3. A laminated natural wood panel according to claim 2, characterized in that the fibres (10) of the natural wood panels (2) are aligned in the same direction.

4. A laminated natural wood panel according to claim 2, characterized in that the fibres (10) of the natural wood panels (2) are aligned in different directions.

5. A laminated natural wood panel according to any of claims 2 to 4, characterized in that at least one further layer is provided and is bonded to the natural wood panel layer (2).

6. A laminated natural wood panel according to claim 5, characterized in that the at least one further layer is a laminated natural wood panel according to any of claims 3 to 5.

7. A laminated natural wood panel according to claim 6, characterized in that the fibres (10) of the individual layers of the laminated natural wood panel are aligned in different directions.

8. A laminated natural wood panel according to claim 5, characterized in that the at least one further layer is made from wood, wood fibre material, sound absorbing, heat insulating, radiation repelling or heat conducting material.

9. A laminated natural wood panel according to any of claims 5 to 8, characterized in that the thicknesses of the layers are different.

10. A laminated natural wood panel according to any of claims 5 to 8, characterized in that the thicknesses of the layers are the same.

## Revendications

1. Panneau en bois naturel, caractérisé par le fait que lors de la coupe du bois naturel, le plan de coupe est disposé de manière telle que les fibres (10) soient inclinées suivant un angle (α) compris entre 20° et 70° par rapport au plan du panneau (2).

2. Panneau composite en bois naturel, caractérisé par le fait qu'il comporte au moins un pli formé de panneaux (2) en bois naturel selon la revendication 1 qui sont liés entre eux.

3. Panneau composite en bois naturel selon la revendication 2, caractérisé par le fait que les fibres (10) des panneaux (2) en bois naturel sont orientées dans la même direction.

4. Panneau composite en bois naturel selon la revendication 2, caractérisé par le fait que les fibres (10) des panneaux (2) en bois naturel sont orientées dans des directions différentes.

5. Panneau composite en bois naturel selon l'une des revendications 2 à 4, caractérisé par le fait qu'il est prévu au moins un pli supplémentaire qui est lié au pli formé de panneaux (2) en bois naturel.

6. Panneau composite en bois naturel selon la revendication 5, caractérisé par le fait que le pli supplémentaire au nombre d'au moins un est un panneau composite en bois naturel selon l'une des revendications 3 à 5.

7. Panneau composite en bois naturel selon la revendication 6, caractérisé par le fait que les fibres (10) des différents plis du panneau composite en bois naturel sont orientées dans différentes directions.

8. Panneau composite en bois naturel selon la revendication 5, caractérisé par le fait que le pli supplémentaire au nombre d'au moins un est réalisé en bois, en matériaux à base de fibres de bois, en matériau insonorisant, en matériau calorifuge, en matériau réfléchissant les rayons ou en matériau conducteur de la chaleur.

9. Panneau composite en bois naturel selon l'une des revendications 5 à 8, caractérisé par le fait que les plis ont des épaisseurs différentes.

10. Panneau composite en bois naturel selon l'une des revendications 5 à 8, caractérisé par le fait que les plis ont même épaisseur.
